# EUROPÄISCHE PATENTSCHRIFT

(11) **EP 0 738 472 B1**
(45) Veröffentlichungstag und Bekanntmachung des Hinweises auf die Patenterteilung: **13.11.2002**
(21) Anmeldenummer: 95201024.7
(22) Anmeldetag: 21.04.1995
(51) Int. Cl.: A23L 1/00, B65D 85/72, A23L 1/24

(54) **Kombination bestehend aus einem pastenartigen Lebensmittel und einer Verpackung**
Combination of pasty food product and package
Combinaison d'un produit alimentaire pâteux et son emballage

(43) Veröffentlichungstag der Anmeldung: 23.10.1996
(73) Patentinhaber: SOCIETE DES PRODUITS NESTLE S.A., 1800 Vevey (CH)
(72) Erfinder: Hillebrand, Brigitte, D-71696 Moeglingen (DE); Trueck, Hans Uwe, D-70499 Stuttgart (DE)
(74) Vertreter: Thomas, Alain

(56) Entgegenhaltungen:
- DE-A- 1 925 806
- FR-A- 2 248 023
- US-A- 3 552 980

## Beschreibung

Die Erfindung betrifft eine Kombination bestehend aus einem pastenartigen Lebensmittel und aus einer symmetrischen Verpackung, die ein Lebensmittel mit mindestens zwei Komponenten enthält und die längs der symmetrischen Achse in abwechselnder Weise je eine jeder Komponente enthält.

Das FR Patent Nr. 2248023 betrifft schon eine Verpackung dieser Art mit zwei verschiedenen Komponenten, die aus einer Fett Phase und einer wässrigen Phase besteht. Dieses Patent ist aber auf dem Bereich der Kosmetik beschränkt. Dabei wird ein Geliervorgang des Produktes in der Verpackung unter Zuhilfenahme eines nachträglich zu entfernenden Formteils ausgenutzt. Das US Patent Nr. 3'552'980 betrifft ein streichfähiges Produkt mit zwei Komponenten, nämlich Erdnussbutter und wässrige Phase mit Frucht. Die fette Phase ist aber nicht fliessfähig.

Der Erfindung liegt die Aufgabe zugrunde, eine Kombination zur Verfügung zu haben, die ein Lebensmittel mit mindestens zwei fliessfähigen Komponenten separat enthält. Auslagerungsversuche haben gezeigt, dass alle zwei- oder mehrphasig abgefüllten Produkte gegenüber gemischten Versionen mit identischer Rezeptur einen geschmacklichen Vorteil aufweisen. Bei derartigen Produktkombinationen sind jedoch spezielle Anpassungen der Rezeptur notwendig. Beispielsweise können mögliche Migrationsvorgänge durch den Austausch von öllöslichen durch wasserlösliche Farbbestandteile verhindert werden.

Die Erfindung betrifft Kombinationen für pastenartige Lebensmittel gemäss den Ansprüchen 1 und 12, wobei die Komponenten eine Bostwickviskosität zwischen 40 und 60 mm aufweisen.

Unter Bostwickviskosität versteht man die Messung des Fliessweges eines Produktes während 30 Sek. bei 20 °C. Diese Messung ist mit einem Gerät der Firma Kinematica AG (Littau, Schweiz) durchgeführt.

Unter pastenartigen Lebensmitteln versteht man jegliche Lebensmittel ,die in den obenerwähnten Viskositätsbereich fallen. Vorzugsweise verwendet man eine Kombination von Mayonnaise und einer Würzphase.

Die symmetrische Verpackung ist entweder eine Glasverpackung ,oder eine Kunststoffverpackung, wie zum Beispiel aus Polyethylenterephtalat oder eine Tubenverpackung.

Erfindungsgemäss ist die Zahl der Komponenten nicht kritisch : man arbeitet mit mindestens zwei Komponenten. Vorzugsweise hat man zwei Komponenten zur Verfügung : zum Beispiel eher eine ölige und eine wässrige Phase. Die Kombination Mayonnaise mit einer Würzphase ist besonders bevorzugt.

Um eine optimale Phasentrennung zu erreichen, muss eine bestimmte Viskosität der beiden Phasen erreicht werden. Versuche haben ergeben, dass bei zu geringer Viskosität die Phasen ineinanderlaufen und sich somit vermischen. Ist die Viskosität zu hoch, treten Lufteinschlüsse zwischen den Phasen auf und die Phasen legen sich nicht glatt aufeinander. Zum anderen ist die Mischbarkeit der beiden Phasen bei der Anwendung problematisch, d. h. die Phasen lassen sich schwer miteinander verrühren. Darüber hinaus hat sich gezeigt, dass der Füllvorgang ebenfalls stark von der Viskosität abhängig ist.

Wie schon oben erwähnt, wird die Produkttextur und der beste Füllvorgang erreicht, wenn die beiden Komponenten eine Bostwickviskosität zwischen 40 und 60 mm aufweisen. Im Falle einer Kombination Mayonnaise- Würzphase, wählt man eine Bostwickviskosität von 40-50 mm für die beiden Phasen.

Die Abfüllung der beiden Komponenten geschieht in unterschiedlichen Formen, wie spiralförmig, in Schichten oder senkrecht nebeneinander. Bevorzugt wird die spiralförmige Abfüllung, um die optische Attraktivität zu erhöhen. Dieser Typ von Abfüllung ist aber nicht kritisch : jegliche Variationen sind möglich. Wenn man Schichten abfüllt, sind die Bedingungen die gleichen wie obenerwähnt, d.h. die Bostwickviskosität der beiden Phasen liegt zwischen 40 mm und 60 mm.

Die Zahl der Zonen der beiden Komponenten ist ebenfalls nicht kritisch : Man kann mit je drei oder mehr Zonen arbeiten . Vorzugsweise hat man zwei, drei oder vier Zonen für jede Komponente.

Betreffend der Zusammensetzung enthält die Mayonnaise zwischen 10 und 80 % Oel und die Würzphase zwischen 0 und 70 % Oel, zwischen 4 und 50 % Wasser und zwischen 0,2 und 6 % Stärke.

Die Würzphase besteht aus einer Basis von Gemüsepüree, Fruchtpüree und weiteren würzenden Bestandteilen, wie z.B. Senf in gemahlener Form oder in solcher von Körnern. Die Würzphase kann auch Stücke enthalten, sowohl Gemüse wie Früchte, wobei die Grösse der Stücke zwischen 1 und 4 mm liegt. Das Lebensmittel besteht aus 20-80 % Mayonnaise und 80-20 % Würzphase, vorzugsweise zu ca. 50 % aus Mayonnaise und zu ca. 50 % aus der Würzphase.

Die zweiphasigen Produkte werden generell als frischer, weniger sauer und als aromatischer beurteilt gegenüber einem gemischt abgefüllten Produkt.

Die Zutaten für die Würzphase werden gemischt, pasteurisiert und rückgekühlt. Diese Schritte sind notwendig, um die mikrobiologische Sicherheit und die Anbruchsicherheit der Produkte zu gewährleisten. Zum anderen ist ein Erhitzungsschritt notwendig, um die modifizierte Stärke zu verkleistern.

Was die Mayonnaise betrifft, ist sie auf herkömmliche Art und Weise vorbereitet. Der pH der beiden Komponenten ist im sauren Bereich, d. h. zwischen 2,8 und 5.

Die erfindungsgemässen Kombinationen können ohne Kühlung während mindestens 12 Monaten aufbewahrt werden.

Die entwickelten Zwei-Phasen Produkte werden mittels eines Koextrusionsdoseurs, der mit Kolben-Ventilen bestückt ist, in Gläser abgefüllt. Die Abfüllung erfolgt in unterschiedlichen Formen über mehrere , sich drehenden Düsen mit gleichzeitiger Glasabsenkung. Die industrielle Realisierung wird mittels längslaufenden Zuführbändern und parallel geschalteten Abfüllern erfolgen.

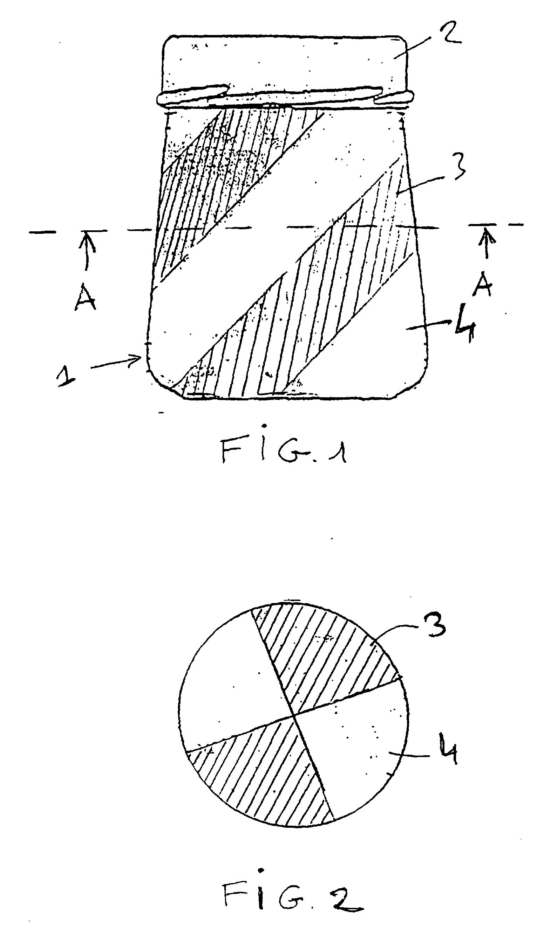

Die Erfindung wird jetzt in Verbindung mit den Zeichnungen näher beschrieben, wobei
Fig. 1 eine schematische Darstellung der Verpackung zeigt und
Fig. 2 einen Schnitt längs Linie A-A von Fig. 1.

Die Verpackung (1) weist einen aufgeschraubten Deckel (2) auf und beinhaltet ein Produkt mit zwei Komponenten (3) und (4). Diese Komponenten sind spiralförmig über einen Winkel von 300 ° abgefüllt. Die Würzphase (3) besteht aus einer Basis von Tomaten/Kürbis und die Mayonnaise (4) enthält 50 % Oel.

Die Erfindung wird jetzt in Verbindung mit den Beispielen näher erläutert, wobei das Verhältnis Mayonnaise/ Würzphase 50/50 beträgt.

### Beispiel

### A. Mayonnaise

Man verwendet eine Mayonnaise mit folgender Zusammensetzung ( %)

| | |
|---|---|
| Oelegehalt | 50 |
| Eigelbgehalt | 1,5 |
| Würzende Bestandteile | 3 |
| Essiggehalt 11% | 4 |
| Salzgehalt | 2 |
| Stärkegehalt | 2,2 |
| Zuckergehalt | 9,2 |
| Wassergehalt | 28,1 |

Die Mayonnaise hat eine Bostwickviskosität von 50 mm.

### B. Würzphase.

Für die wässrige Phase werden 5 Varianten aufgeführt, die eine Konsistenz wie die eingesetzte Mayonnaisephase aufweisen. Für alle diese Beispiele wurden die Bostwickviskosität auf 40-50 mm eingestellt. Die Gehalte sind alle in %.

| Bestandteile | Mexicana | Tomate/Kürbis | Grüne Sauce | Senf | Exotica |
|---|---|---|---|---|---|
| Gemüsepüree | 12 | 18 | 5 | 28(Senf) | 25(Fruchtanteil) |
| Gemüsestücke/Kräuter) | 17 | 35,1 | 15,6 | 0 | 0 |
| Fettgehalt | 15 | 0 | 20 | 15,0 | 0 |
| Stärkegehalt | 3,6 | 2,6 | 3,5 | 0,2 | 4 |
| Zuckergehalt | 12 | 12 | 8,5 | 6 | 21 |
| Essiggehalt 11% | 4,8 | 7,5 | 4,6 | 9,0 | 5,5 |
| Salzgehalt | 3,8 | 2,2 | 2,8 | 3,5 | 0,4 |
| Aromatisierende Bestandteile | 2 | 0,1 | 6 | 0,2 | 0,5 |
| Wassergehalt | 29,8 | 22,5 | 34 | 38,1 | 43,6 |

Jede dieser Komponente wird dann mit der Mayonnaise zu 50-50 zusammen auf einer hygienischen Linie abgefüllt.

## Patentansprüche

1. Kombination bestehend aus einem pastenartige Lebensmittel und einer symmetrischer Verpackung, die ein Lebensmittel mit mindestens zwei Komponenten enthält und die längs der Symmetrieachse in abwechselnder Weise je eine jeder Komponente enthält , **dadurch gekennzeichnet, dass** diese Komponenten eine Bostwickviskosität zwischen 40 und 60 mm aufweisen, wobei man unter Bostwickviskosität die Messung des Fliessweges eines Produktes während 30 Sek. bei 20 °C versteht.

2. Kombination gemäss Anspruch 1, **dadurch gekennzeichnet ,dass** eine Komponente Mayonnaise und die zweite Komponente eine Würzphase ist.

3. Kombination gemäss Anspruch 1 oder 2; **dadurch gekennzeichnet, dass** sie eine spiralförmige Abfüllung aufweist.

4. Kombination gemäss Ansprüchen 1 bis 3, **dadurch gekennzeichnet, dass** jede Komponente in zwei Zonen anwesend ist.

5. Kombination gemäss Ansprüchen 2 bis 4, **dadurch gekennzeichnet, dass** der Oelgehalt der Mayonnaise zwischen 10 und 80 % liegt.

6. Kombination gemäss Ansprüchen 2 bis 5, **dadurch gekennzeichnet, dass** sie zu ca. 20-80 % aus Mayonnaise und zu ca. 80-20 % aus Würzphase besteht.

7. Kombination gemäss Ansprüchen 2 bis 6, **dadurch gekennzeichnet, dass** der Oelgehalt und der Wassergehalt der Würzphase zwischen 0 und 70 % respektiv zwischen 4 und 50 % liegen.

8. Kombination gemäss Anspruch 7, **dadurch gekennzeichnet, dass** die Würzphase Gemüse- oder Fruchtpuree, stückige Anteile sowie weitere würzende Bestandteile enthält.

9. Kombination gemäss Ansprüchen 2 bis 8, **dadurch gekennzeichnet, dass** die Mayonnaise und die Würzphase eine Bostwickviskosität zwischen 40 und 50 mm aufweisen.

10. Kombination gemäss Ansprüchen 2 bis 8, **dadurch gekennzeichnet, dass** die Würzphase zwischen 0,2 und 6 % Stärke enthält.

11. Kombination gemäss Ansprüchen 1 bis 10, **dadurch gekennzeichnet, dass** die symmetrische Verpackung eine Glasverpackung oder eine Tubenverpackung ist.

12. Kombination bestehend aus einem pastenartigen Lebensmittel und einer symmetrischen Verpackung, die ein Lebensmittel mit mindestens zwei Komponenten enthält, wobei diese Komponenten in Schichten sind, **dadurch gekennzeichnet, dass** diese Komponenten eine Bostwickviskosität zwischen 40 und 60 mm aufweisen, wobei man unter Bostwickviskosität die Messung des Fliessweges eines Produktes während 30 Sek. bei 20 °C versteht.

## Claims

1. A combination consisting of a pasty foodstuff and symmetrical packaging, which contains a foodstuff comprising at least two components and which contains each of the components in alternating manner along the axis of symmetry, **characterised in that** these components exhibit a Bostwick viscosity of between 40 and 60 mm, wherein Bostwick viscosity is understood to mean measurement of the flow path of a product over 30 seconds at 20°C.

2. A combination according to claim 1, **characterised in that** one component is mayonnaise and the second component is a condiment phase.

3. A combination according to claim 1 or claim 2, **characterised in that** spiral filling is provided.

4. A combination according to claims 1 to 3, **characterised in that** each component is present in two zones.

5. A combination according to claims 2 to 4, **characterised in that** the oil content of the mayonnaise is between 10 and 80 %.

6. A combination according to claims 2 to 5, **characterised in that** it consists of approx. 20-80 % mayonnaise and approx. 80-20% condiment phase.

7. A combination according to claims 2 to 6, **characterised in that** the oil content and the water content of the condiment phase are between 0 and 70 % and between 4 and 50 % respectively.

8. A combination according to claim 7, **characterised in that** the condiment phase contains vegetable or fruit puree, lumps and other condiment constituents.

9. A combination according to claims 2 to 8, **characterised in that** the mayonnaise and the condiment phase exhibit a Bostwick viscosity of between 40 and 50 mm.

10. A combination according to claims 2 to 8, **characterised in that** the condiment phase contains between 0.2 and 6 % starch.

11. A combination according to claims 1 to 10, **characterised in that** the symmetrical packaging is a jar or a tube.

12. A combination consisting of a pasty foodstuff and symmetrical packaging, which contains a foodstuff comprising at least two components, these components being arranged in layers, **characterised in that** these components exhibit a Bostwick viscosity of between 40 and 60 mm, wherein Bostwick viscosity is understood to mean measurement of the flow path of a product over 30 seconds at 20°C.

## Revendications

1. Combinaison formée d'un produit alimentaire pâteux et d'un emballage symétrique qui renferme un produit alimentaire comprenant au moins deux composants et qui contient en alternance l'un de chaque composant le long de l'axe de symétrie, **caractérisée en ce que** ces composants présentent une viscosité Bostwick comprise entre 40 et 60 mm, la viscosité Bostwick étant la mesure du chemin parcouru par un produit s'écoulant pendant 30 secondes à 20°C.

2. Combinaison suivant la revendication 1, **caractérisée en ce que** l'un des composants consiste en mayonnaise et le second composant est une phase d'assaisonnement.

3. Combinaison suivant la revendication 1 ou 2, **caractérisée en ce qu'**elle présente un mode de remplissage en spirale.

4. Combinaison suivant les revendications 1 à 3, **caractérisée en ce que** chaque composant est présent dans deux zones.

5. Combinaison suivant les revendications 2 à 4, **caractérisée en ce que** la teneur en huile de la mayonnaise se situe entre 10 et 80 %.

6. Combinaison suivant les revendications 2 à 5, **caractérisée en ce qu'**elle est constituée d'environ 20 à 80 % de mayonnaise et d'environ 80 à 20 % de phase d'assaisonnement.

7. Combinaison suivant les revendications 2 à 6, **caractérisée en ce que** la teneur en huile et la teneur en eau de la phase d'assaisonnement se situent, respectivement, entre 0 et 70 % et entre 4 et 50 %.

8. Combinaison suivant la revendication 7, **caractérisée en ce que** la phase d'assaisonnement contient une purée de légumes ou de fruits, des fractions en morceaux ainsi que d'autres constituants d'assaisonnement.

9. Combinaison suivant les revendications 2 à 8, **caractérisée en ce que** la mayonnaise et la phase d'assaisonnement présentent une viscosité Bostwick entre 40 et 50 mm.

10. Combinaison suivant les revendications 2 à 8, **caractérisée en ce que** la phase d'assaisonnement contient entre 0,2 et 6 % d'amidon.

11. Combinaison suivant les revendications 1 à 10, **caractérisée en ce que** l'emballage symétrique est un emballage en verre ou un emballage en tube.

12. Combinaison constituée d'un produit alimentaire pâteux et d'un emballage symétrique qui contient un produit alimentaire ayant au moins deux composants, lesquels sont disposés en couches, **caractérisée en ce que** ces composants présentent une viscosité Bostwick comprise entre 40 et 60 mm, la viscosité Bostwick étant la mesure du chemin parcouru par un produit s'écoulant pendant 30 secondes à 20°C.
